# EUROPEAN PATENT SPECIFICATION

(11) **EP 4 375 814 B1**
(45) Date of publication and mention of the grant of the patent: **15.10.2025**
(21) Application number: 22306734.9
(22) Date of filing: 24.11.2022
(51) Int. Cl.: G06F 3/0346, G06F 3/04842, G06F 3/0481, G06F 3/0485, G06F 3/0486

(54) **METHODS AND SYSTEMS FOR CONTROLLING MULTIPLE OUTPUT DEVICES OR LOCATING PASSIVE ACCESSORIES IN MULTIPLE SPACES**
VERFAHREN UND SYSTEME ZUR STEUERUNG MEHRERER AUSGABEVORRICHTUNGEN ODER ZUR LOKALISIERUNG PASSIVER ZUBEHÖRE IN MEHREREN RÄUMEN
PROCÉDÉS ET SYSTÈMES DE COMMANDE DE DISPOSITIFS À SORTIES MULTIPLES OU DE LOCALISATION D'ACCESSOIRES PASSIFS DANS DE MULTIPLES ESPACES

(43) Date of publication of application: 29.05.2024
(73) Proprietor: Advanced Magnetic Interaction, AMI, 38170 Seyssinet-Pariset (FR)
(72) Inventor: Hautson, Tristan, 38170 Seyssinet-Pariset (FR); Jobert, Timothée, 38170 Seyssinet-Pariset (FR)
(74) Representative: Peterreins Schley

(56) References cited:
- US-A1- 2018 011 597

## Description

### TECHNICAL FIELD

The present disclosure relates to the technical field of determining and/or tracking a location of passive accessories, more specifically to a computer-implemented method for controlling a representation of a user-borne device with respect to one or more output devices, and to a system for controlling a representation of a user-borne device with respect to one or more output devices.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

Document US 2018/011597 A1 relates to an electronic device including a touch screen and first and second magnetic sensors configured to detect a spatial position of an input device having a magnetic field generating unit. The electronic device comprises a controller configured to execute a hold mode of holding the execution of an operation while the spatial position of the input device is moved away from the touch screen while being maintained within a reference range, and release the hold mode and execute the operation when the spatial position of the input device is moved out of the reference range.

A user-operation of the user-borne device within a sensing volume created by the plurality of magnetometers may be represented on an output device (e.g., a screen) to a user. More specifically, a movement of the user-borne device within the sensing volume may be reproduced as a movement of a virtual object on the output device. In current applications, a visual reproduction on an output device of a location of a user-borne device within the sensing volume may be inaccurate and not reliable with respect to certain arrangements of the plurality of magnetometers and the output device. Furthermore, current applications do not provide solutions to control a reproduction of a location of the user-borne device, more specifically an electrically and/or electronically passive user-borne device, with respect to multiple output devices.

Thus, the object of the present disclosure is to provide a computer-implemented method and a system which enable an improved control of a representation of a user-borne device, more specifically an electrically and/or electronically passive user-borne device, with respect to one or more output devices.

### SUMMARY

The present disclosure relates to a computer-implemented method for controlling a representation of a user-borne device with respect to one or more output devices as defined in claim 1, and a system for controlling a representation of a user-borne device with respect to one or more output devices as defined in claim 14. The dependent claims depict embodiments of the present disclosure.

According to a first aspect of the present disclosure, a computer-implemented method for controlling a representation of a user-borne device with respect to one or more output devices is provided. The method comprises obtaining magnetic field measurements associated with at least one magnetic object and measured with a plurality of magnetometers. The at least one magnetic object is coupled to a user-borne device. The method further comprises obtaining output device location data indicative of an output device location of one or more output devices relative to the plurality of magnetometers. In addition, the method comprises determining a user-borne device location based on the collected magnetic field measurements and determining a pointing location of the user-borne device relative to the one or more output devices based on the output device location data and the user-borne device location. Determining the pointing location comprises determining a pointing direction and a pointing position of the user-borne device relative to the one or more output devices. Furthermore, the method comprises determining that the user-borne device is interacting on one output device of the one or more output devices based on the determined pointing location, which comprises selecting one output device of the one or more output devices based on the determined pointing location. The computer-implemented method may lead to a reliable and accurate control of a representation of a user-borne device relative to and/or on one or more output devices. Furthermore, the computer-implemented method can provide a solution to control a representation of a user-borne device, more specifically an electrically and/or electronically passive user-borne device, with respect to more than one output devices.

According to a second aspect of the present disclosure, a system for controlling a representation of a user-borne device with respect to one or more output devices is provided. The system comprises a user-borne device, wherein the user-borne device comprises at least one magnetic object. Furthermore, the system comprises a plurality of magnetometers configured to perform magnetic field measurements associated with the at least one magnetic object. In addition, the system comprises one or more output devices. The system is configured to execute a computer-implemented method according to the first aspect of the present disclosure. The system may provide a reliable and accurate control of a representation of a user-borne device relative to one or more output devices. Furthermore, the system may provide a solution to control a representation of a user-borne device, more specifically an electrically and/or electronically passive user-borne device, with respect to more than one output devices.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: schematically illustrates a process flow diagram of a computer-implemented method for controlling a representation of a user-borne device with respect to one or more output devices according to the first aspect of the present disclosure;
- **Fig. 2**: schematically illustrates the computer-implemented method according to the first aspect of the present disclosure in more detail;
- **Fig. 3**: is a schematic view of a system for controlling a representation of a user-borne device with respect to one or more output devices according to a second aspect of the present disclosure;
- **Fig. 4**: is a more detailed schematic view of the system according to the second aspect of the present disclosure, wherein the user-borne device is operated within a sensing volume created by the plurality of magnetometers and wherein a control of a representation of the user-borne device is shown with respect to the one or more output devices;
- **Fig. 5**: is a more detailed schematic view of the system according to the second aspect of the present disclosure, wherein a control of a representation of the user-borne device is shown with respect to more than one output devices;
- **Fig. 6**: is a schematic top view of the system according to the second aspect of the present disclosure, wherein the user-borne device is operated on an interaction surface and wherein a control of a representation of the user-borne device is shown with respect to more than one output devices;
- **Fig. 7**: is a schematic side view of the system shown in Fig. 6;
- **Figs. 8A and 8B**: are schematic views of a user-borne device comprising at least one magnetic object;
- **Figs. 9A and 9B**: are schematic views of a user-borne device comprising at least one magnetic object, wherein the magnetic object is rotatable about a second user-borne device axis;
- **Figs. 10A and 10B**: are schematic views of a user-borne device comprising at least one magnetic object, wherein the magnetic object is rotatable about a first user-borne device axis;
- **Fig. 11**: is a schematic view of a plurality of magnetometers arranged in rows and columns with respect to an interaction support.

### DETAILED DESCRIPTION

Embodiments of the computer-implemented method and the system for controlling a representation of a user-borne device with respect to one or more output devices according to the present disclosure will be described in reference to the drawings as follows.

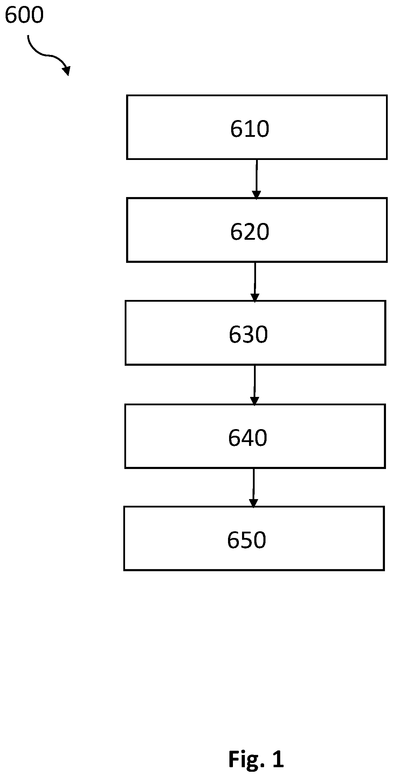

Fig. 1 schematically illustrates a computer-implemented method 600 for controlling a representation of a user-borne device with respect to one or more output devices according to the first aspect of the present disclosure. The method 600 comprises obtaining magnetic field measurements 610 associated with at least one magnetic object 110. The magnetic field measurements are measured with a plurality of magnetometers 300. The at least one magnetic object 110 is coupled to a user-borne device 100. The obtained magnetic field measurements may be indicative of a magnetic field associated with the at least one magnetic object. The method 600 further comprises obtaining output device location data 620 indicative of an output device location of one or more output devices 500 relative to the plurality of magnetometers 300. Additionally, the method 600 comprises determining a user-borne device location 630 based on the collected magnetic field measurements and determining a pointing location 640 of the user-borne device 100 relative to the one or more output devices 500 based on the output device location data and the user-borne device location. Furthermore, the method 600 comprises determining 650 that the user-borne device 100 is interacting on one output device of the one or more output devices 500 based on the determined pointing location. Pointing location may comprise a pointing position and/or a pointing orientation (e.g., a pointing direction which will be described below). The computer-implemented method may be suitable to represent, more specifically to reproduce the user-borne device 100 as a virtual object on one output device of the one or more output devices 500. The user-borne device 100 may be represented as a virtual object on one output device of the one or more output devices. A manipulation of the user-borne device location during a user operation may be represented as a virtual object on one output device of the one or more output devices 500. The order, in which the data or measurements as described above are obtained, may vary. The computer-implemented method 600 as described above may provide a reliable and accurate control of a representation of a user-borne device 100 relative to one or more output devices 500. Furthermore, method 600 can provide a solution to control a representation of a user-borne device 100, more specifically an electrically and/or electronically passive user-borne device 100, with respect to more than one output devices 500.

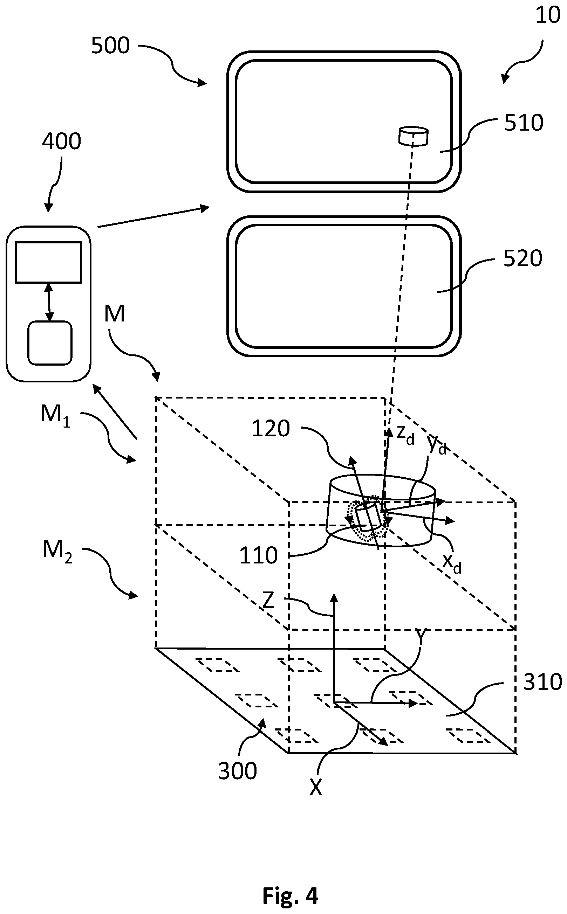

The plurality of magnetometers 300 may be configured to create a sensing volume M (as indicated, e.g., in Fig. 4). The sensing volume may have an ellipsoidal form. The plurality of magnetometers 300 may be associated with a magnetometer plane 310. More specifically, the magnetometer plane 310 may be defined by a plane that may extend through a majority of the plurality of magnetometers 300. In some embodiments, the user-borne device 100 may be operable on an interaction surface 210, more specifically wherein the interaction surface 210 may be defined within the sensing volume M.

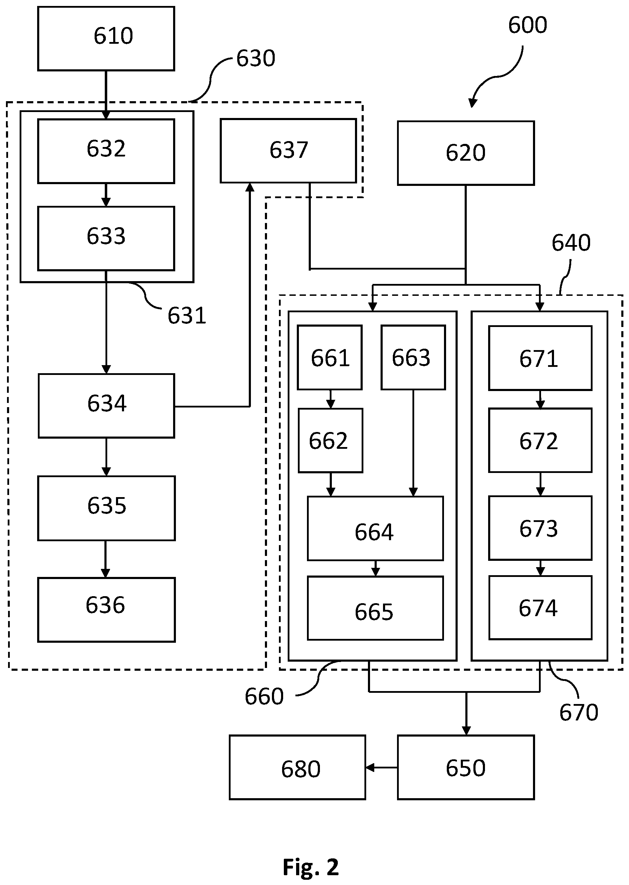

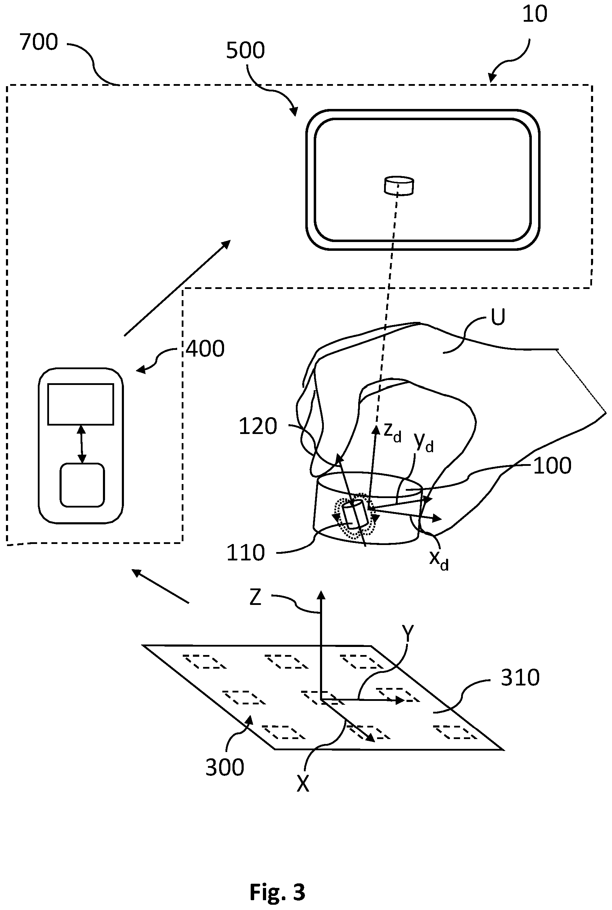

The method 600 may comprise defining a reference coordinate system XYZ relative to the plurality of magnetometers 300 (see, e.g., Figs. 2 and 3). The reference coordinate system XYZ may comprise a first reference axis X, a second reference axis Y and a vertical reference axis Z. The first reference axis X and the second reference axis Y may be orthogonal to each other. The vertical reference axis Z may be orthogonal to the first reference axis X and the second reference axis Y. The vertical reference axis Z may extend through a center of the plurality of magnetometers 300. In embodiments, the first reference axis X and the second reference axis Y may be defined on the magnetometer plane 310. In this case, the vertical reference axis Z may be orthogonal to the magnetometer plane 310.

The user-borne device 100 may be electrically and/or electronically passive. More specifically, electrically passive means that the user-borne device 100 may not comprise a power source (e.g., batteries) and/or means to receive power (e.g., wireless power transmission via an inductive coil) for powering a feature (e.g., an electronic feature) of the user-borne device 100. Electronically passive means that no computation or processing occurs (or happens) on the user-borne device 100.

The term "at least one magnetic object" may refer to an object which may comprise components made of magnetic material, i.e., a material that has magnetic properties measurable by the plurality of magnetometers 300. The user-borne device 100 and/or the at least one magnetic object 210 may be mobile, i.e., freely movable within the reference coordinate system XYZ. In other words, during a user operation (i.e., an operation wherein the user-borne device 100 and/or the at least one magnetic object 110 is operated by a user), the location of the user-borne device 100 within the sensing volume M and/or relative to an interaction surface 210 may be manipulated by a user within the sensing volume M.

The at least one magnetic object 110 may be a permanent magnet. In embodiments, the at least one magnetic object 110 may be configured to generate a non-zero magnetic field. It may comprise a paramagnetic or diamagnetic material. In embodiments, the at least one magnetic object 110 may comprise a ferromagnetic material or a ferrimagnetic material.

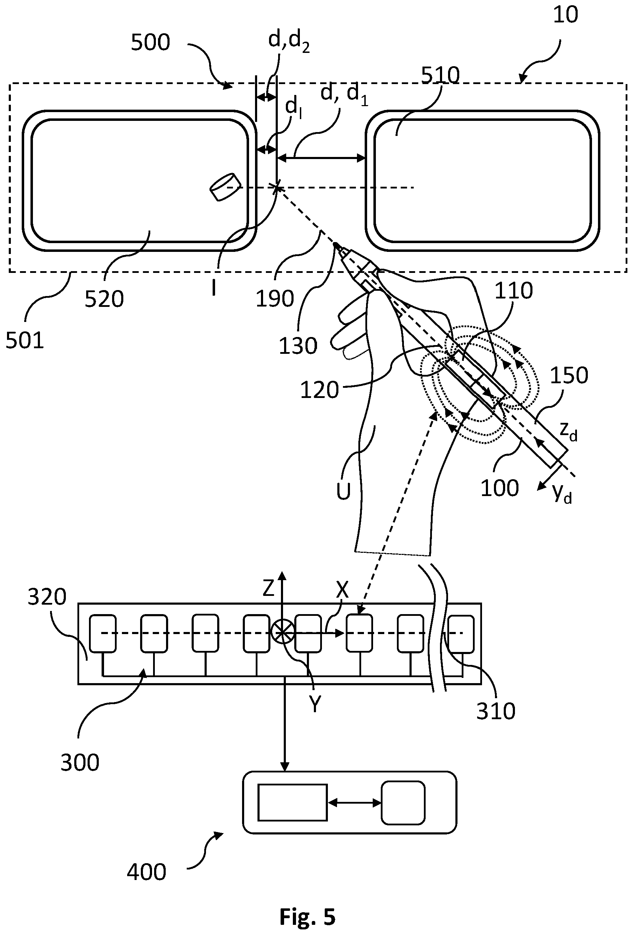

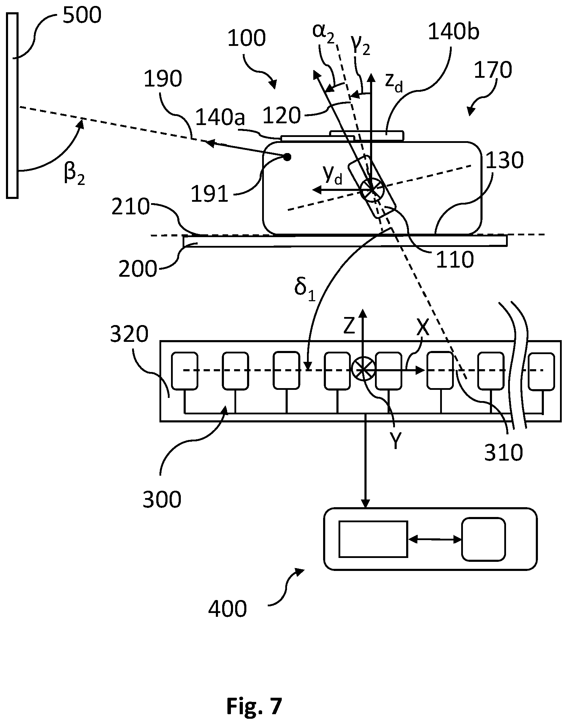

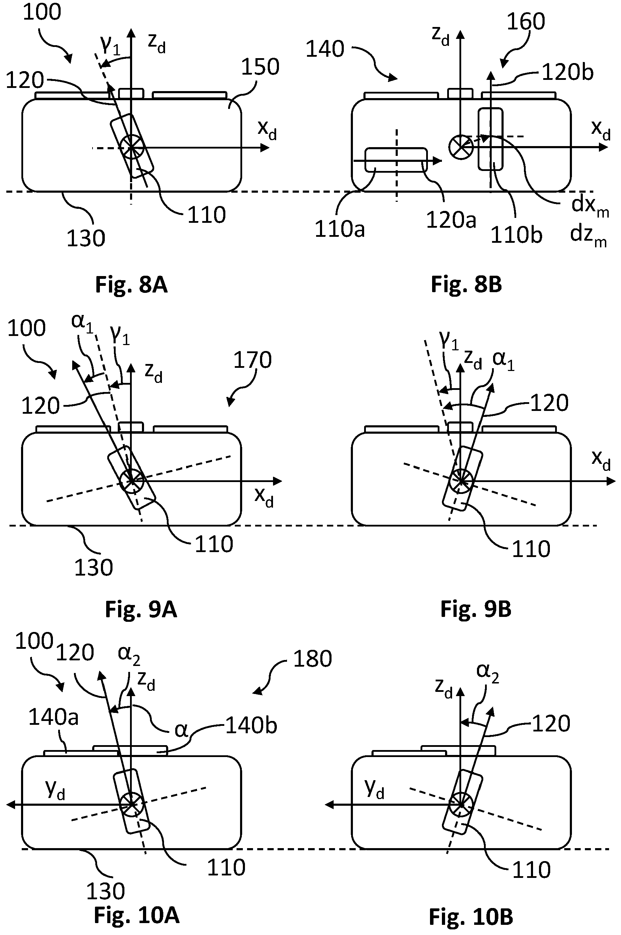

The method 600 may further comprise defining a user-borne device coordinate system (see, e.g., Figs. 8A to 10B). The device coordinate system may comprise a first device axis x_{d}, a second device axis y_{d} orthogonal to the first device axis x_{d}, and a vertical device axis z_{d}. The vertical device axis z_{d} may be orthogonal to a device contact surface or point 130 and/or orthogonal to a plane defined by the first device axis x_{d} and the second device axis y_{d}. The device contact surface or point 130 may be the part of the user-borne device 100 which, during a user operation, may be in contact with the interaction surface 210. In the examples shown, e.g., in Fig. 7, the user-borne device 100 may comprise a contact surface 130 contacting an interaction surface 210. In other examples, the user-borne device may comprise a contact point 130 (e.g., a stylus or other writing device comprising a writing tip which contacts an interaction surface 210 during a writing operation). In the example shown in Fig. 5, the user-borne device 100 may be operated within a sensing volume M but not on an interaction surface 210. In this case, the user-borne device 100 may be used, e.g., as a pointer. In some embodiments, the device coordinate system may be defined within a geometric center of the user-borne device 100.

Fig. 2 schematically illustrates the computer-implemented method 600 in more detail. Output device location data may comprise a set of output device location parameters indicative of a geometric position, a geometric orientation and/or a geometric distance of the one or more output devices 500 relative to the plurality of magnetometers 300. In examples, the plurality of magnetometers, more specifically the magnetometer plane 310, may be arranged inclined, e.g., orthogonal, to the one or more output devices 500. In other embodiments, the magnetometer plane 310 may be arranged parallel (or substantially parallel) to the one or more output devices 500. A database may store output device location data. The output device location data may be obtained from the database. In embodiments, output device location data may be predefined based on a specific arrangement of the one or more output devices 500 with respect to the plurality of magnetometers 300. In embodiments, output device location data may be generated and stored based on a calibration step. A user may be prompted via a user interface to input data indicative of the geometric position, the geometric orientation and/or the geometric distance of the one or more output devices 500 relative to the plurality of magnetometers 300. The output device location data may also be updated, e.g., when changing the location of the plurality of magnetometers 300 relative to the one or more output devices 500. In some embodiments, the geometric position, the geometric orientation and/or the geometric distance of the one or more output devices 500 relative to the plurality of magnetometers 300 may be automatically computed based on an arrangement (e.g., structure, design, layout) of the one or more output devices 500 relative to the plurality of magnetometers 300, e.g., based on an arrangement of the one or more output devices 500 within a system 10 as described below.

As indicated in Fig. 2, determining a user-borne device location 630 may comprise determining an absolute magnetic object location 631. The absolute magnetic object location may be indicative of an absolute magnetic object position and/or an absolute magnetic object orientation of the at least one magnetic object 110 relative to the reference coordinate system XYZ. More specifically, the absolute magnetic object location may be determined based on the obtained magnetic field measurements. In embodiments, determining an absolute magnetic object location 631 may comprise generating magnetic field measurement data 632 based on the obtained magnetic field measurements. The magnetic field measurement data may be indicative of a magnetic field position, a magnetic field orientation and/or a magnetic field strength relative to the reference coordinate system XYZ. Determining an absolute magnetic object location 631 may further comprise processing magnetic field measurement data 633 to relate magnetic field measurement data to an absolute magnetic object location (i.e., the absolute magnetic object location as described above).

The absolute magnetic object location may include a magnetic moment vector 120 and/or a magnetic position vector associated with the at least one magnetic object 110. The magnetic moment vector 120 may be indicative of a magnetic object orientation with respect to the reference coordinate system XYZ and/or the magnetic position vector may be indicative of a magnetic object position with respect to the reference coordinate system XYZ. The absolute magnetic object orientation may be defined by a first set of magnetic object inclination angles δ1, δ2, δ3 measured between the magnetometer plane 310 and the magnetic moment vector 120. In some embodiments, absolute magnetic object orientation may be defined by a first set of cartesian coordinates defined within the reference coordinate system XYZ. The first set of magnetic object orientation angles δ₁, δ₂, δ₃ may be measured relative to the reference coordinate axes X, Y, Z, more specifically between the magnetic moment vector 120 and the respective axes X, Y, Z of the reference coordinate system XYZ. For example, as shown in Fig. 7, the first magnetic object orientation angle δ₁ may be defined between the first reference axis X and the magnetic moment vector 120, more specifically in the XZ-plane. The magnetic moment vector 120 and/or the magnetic moment position may be determined based on the magnetic field measurements. The magnetic moment vector and/or the magnetic moment position may be determined based on an implementation of a mathematical model associating each measurement of a magnetometer of the plurality of magnetometers 300 with a location of the at least one magnetic object 110 in the reference coordinate system XYZ. The model may be typically constructed from physical equations of electromagnetism, more specifically equations of magnetostatics. To establish this model, the at least one magnetic object 110 may be approximated by a dipole. Each magnetometer of the plurality of magnetometers 300 may be a vector magnetometer and may be configured to measure the magnetic field in one, two or three dimensions.

Referring to Fig. 2, determining a user-borne device location 630 may comprise determining a relative magnetic object location 634 indicative of a relative magnetic object position and/or a relative magnetic object orientation of the at least one magnetic object 110 relative to the user-borne device 110, more specifically to the device coordinate system. The relative magnetic object orientation may be defined based on a second set of magnetic object inclination angles γ1, γ2, γ3. More specifically, the second set of inclination angles γ1, γ2, γ3 may be measured between the magnetic moment vector 120 and the respective axes of the device coordinate system 210. Determining a relative magnetic object location 634 may be based on the absolute magnetic object location as described above and a first set of geometric parameters. The first set of geometric parameters may comprise predefined geometric parameters indicative of a geometric position and a geometric orientation of the at least one magnetic object 100 relative to the user-borne device 100, more specifically in an initial state of the user-borne device 100 (the initial state will be described below). In other words, based on the determined absolute location of the at least one magnetic object 110 and the knowledge of the arrangement of the at least one magnetic object 110 within the user-borne device 100 (more specifically relative to the device coordinate system), the user-borne device location may be known.

In embodiments, determining a relative magnetic object location 634 may comprise detecting a position and/or orientation deviation 635 of the relative magnetic object position and/or a relative magnetic object orientation caused by a translation and/or a rotation of the at least one magnetic object 110 relative to the user-borne device 100, more specifically wherein the user-borne device 100 may be in an actuated state. As mentioned above, the device coordinate system may be defined in a geometric center of the user-borne device 100. In the initial state, the at least one magnetic object 110 may be in an initial location, e.g., inclined and/or distanced with respect to the device coordinate system and/or to the geometric center of the user-borne device 100. The user-borne device 100 may be in an actuated state, when the at least one magnetic object 110 is in an actuated location relative to the initial location (and/or relative to the user-borne device 100 and/or to the housing 150). In other words, the user-borne device 100 may be in an actuated state, when the at least one magnetic object 110 is rotated and/or translated relative to the user-borne device 100, more specifically from the initial location. In the actuated state, the magnetic object orientation and/or the magnetic object position of the at least one magnetic object 110 relative to the device coordinate system may be different compared to the initial state. As indicated in Fig. 2, the method 600 may comprise, in response to detecting the position and/or orientation deviation, determining at least one trigger event 636 associated with the position and/or the orientation deviation. Based on the detected specific translation and/or rotation, the method 600 may comprise transforming the detected position and/or orientation deviation to a trigger event associated with the respective translation and/or rotation. In an example, the method 600 may obtain data from a database. The database may comprise data associating at least one trigger event with a specific translation and/or rotation of the at least one magnetic object 110 from the initial location to the actuated location. Examples of the at least one trigger event will be described in detail below.

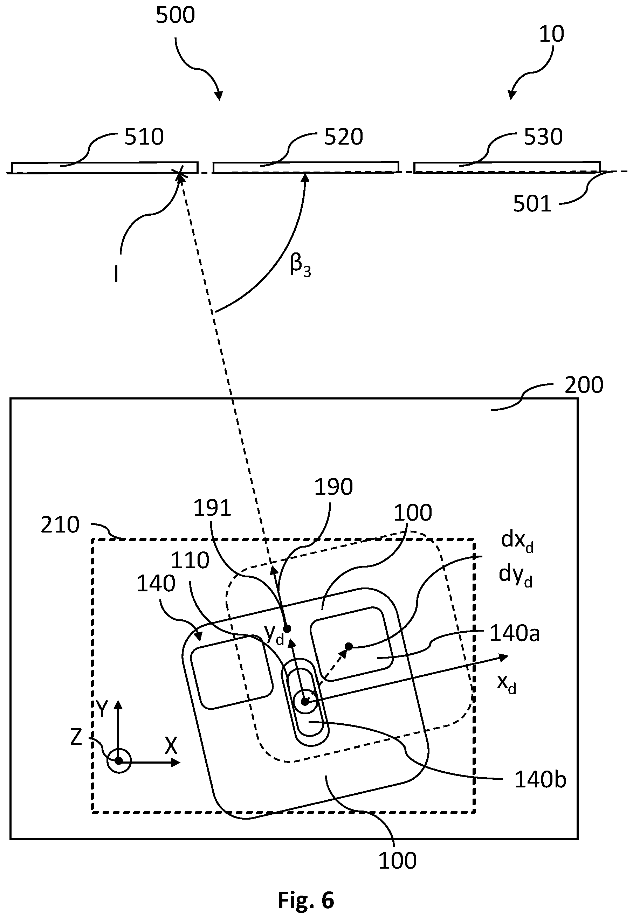

In embodiments, determining a user-borne device location 630 may comprise defining a capturing position 637 relative to the user-borne device 100. More specifically, the capturing position 191 may be defined with respect to the device coordinate system (the capturing position 191 is shown, e.g., in Fig. 6). The method 600 may comprise determining the user-borne device location 630 relative to the capturing position 191. As mentioned above, the user-borne device location can be determined based on the relative magnetic object location. However, in this case the user-borne device location may be determined relative to the device coordinate system, which may be defined in a geometric center of the user-borne device 100. In an example, the user-borne device 100 may be a computer-mouse. The representation of the computer mouse on an output device 500 may be unpleasant for a user, when the location of the user-borne device 100 is determined relative to the device coordinate system, i.e., to a geometric center of the user-borne device 100. The capturing position 191 may be a position shifted from the device coordinate system (e.g., the geometric center) towards a side of the user-borne device 100, which, during a user operation, may be closest to the one or more output devices 500. In an example, the capturing position 191 may be positioned between two clicking manipulation features, which will be described in more detail below. In other examples, the capturing position 191 may be defined at a position which is at a distance to the user-borne device 100 (e.g., from the user-borne device 100 towards the one or more output devices 500). In other words, in this embodiment the capturing position 191 may not be located on or within the user-borne device 100. This may allow a more user-friendly and/or ergonomic use of the user-borne device 100, since, for example, even a simple turn of the wrist may be detected. Referring back to Fig. 2, defining the capturing position 637 may comprise obtaining device geometry data indicative of a geometry of the user-borne device 100. The device geometry data may be obtained from a database. Defining the capturing position 637 may be based on the relative magnetic object location 634 and the obtained device geometry data. In other words, based on the knowledge of the location of at least one magnetic object 110 relative to user-borne device 100 and the obtained device geometry data, it may be possible to define an advantageous capturing position 637 for determining the user-borne location, which can lead to an improved representation of the user-borne device 100 on the one or more output devices 500.

Referring to Fig. 2, determining a pointing location 640 may comprise determining a pointing direction 660 of the user-borne device 100 relative to the one or more output devices 500. The pointing direction 190 may be indicative of a pointing orientation of the user-borne device 100, more specifically relative to the one or more output devices 500. The pointing direction 190 may be determined relative to the device coordinate system. The pointing direction 190 is shown in Figs. 5 to 7. As shown, e.g., in Fig. 5, the pointing direction 190 may be coaxial to the magnetic moment vector 120. More specifically, this may be an embodiment, wherein the user-borne device 100 may be a writing device (e.g., a stylus) or a pointer.

In embodiments, determining the pointing direction 660 may comprise obtaining device geometry data 661 indicative of a geometry of the user-borne device 100 and specifying the pointing direction 662 based on the obtained device geometry data, more specifically relative to the device coordinate system. More specifically, the device geometry data may be predetermined and associated with a specific type of a user-borne device 100. In an example, the user-borne device 100 may be a computer mouse. In this case, the computer mouse may comprise a predetermined geometry that causes the user to hold the computer mouse in a certain way and in a certain direction. In this case, the pointing direction 190 may be dependent on the predetermined device geometry. Device geometry data may be obtained from a database storing data associated with a specific type of a user-borne device 100.

In embodiments, determining the pointing direction 660 may further comprise initializing 663 the user-borne device 100 relative to the one or more output devices 500 to specify the pointing direction 190 relative to the device coordinate system. Initializing 663 the user-borne device 100 may comprise prompting, more specifically via a user interface, a user to hold the user-borne device 100 in a preferred pointing direction 190 relative to the one or more output devices 500 and storing the preferred pointing direction 190. This may be especially useful when the geometry of the user-borne device 100 does not cause a certain way of handling the user-borne device 100. In embodiments, initializing 663 the user-borne device 100 may be done by a calibration step, thereby specifying the pointing direction 190. The calibration step may be carried out during manufacturing.

The one or more output devices 500 may define an output device plane 501 (see, e.g., Figs. 5 and 6). Determining a pointing location 640 may comprise determining 664 a virtual intersection point I of the pointing direction 190 and the output device plane 501 (see, e.g., Fig. 5). In other words, it may be determined based on the user-borne device location whether the user-borne device 100 points (or is oriented with its pointing direction 190) on the one or more output devices 500 or not. More specifically, the output device plane 501 may be defined on a surface of the one or more output devices 500 being oriented towards the user-borne device 100. In embodiments, wherein only one output device may be provided, the one output device may comprise an output device surface, and the virtual intersection point I of the pointing direction 190 and the output device surface 501 may be determined. In embodiments, wherein at least two output devices 500 are provided which are arranged directly adjacent to each other, the at least two output devices 500 may also define an output device surface 501. The virtual intersection point I of the pointing direction 190 and the output device surface 501 may be determined. The pointing direction 190 may be defined by a third set of inclination angles β₁, β₂, β₃ measured between the pointing direction 190 and the output device plane 501 (or surface). As shown in Fig. 6, the third pointing direction inclination angle β₃ may be measured between output device plane 501 and the pointing direction 190 in the XY plane. As shown in Fig. 7, the second pointing direction inclination angle β₂ may be measured between output device plane 501 and the pointing direction 190 in the XZ plane. As shown in Fig. 6, the one or more output devices 500 may comprise a first output device 510, a second output device 520 and a third output device 530. These output devices 510, 520, 530 are shown in this embodiment to be arranged in the same output device plane 501. However, in other embodiments, at least two output devices 500 may also be arranged in different planes, different positions and/or different orientations with respect to each other. The set of output device location parameters as described above may also be indicative of a geometric position, a geometric orientation and/or a geometric distance of the at least two output devices 500 relative to each other.

Determining a pointing location 640 may comprise determining 665, based on the virtual intersection point I and the output device location data, whether the virtual intersection point I is located on the one or more output devices 500, or, at a distance d to the one or more output devices 500. Determining a pointing location 640 may comprise when determining, that the virtual intersection point I is located on one output device of the one or more output devices 500, defining the pointing location based on the virtual intersection point I. This is shown in Fig. 6, wherein the virtual intersection point I is located directly on a first output device 510 of the one or more output devices 500. In embodiments, determining a pointing location 640 may comprise when determining, that the virtual intersection point I is located at a distance d to the one or more output devices 500, determining a location of least distance dₗ from the virtual intersection point I to an output device of the one or more output devices 500. Determining a pointing location 640 may comprise mapping the pointing location to the location of least distance dₗ on one output device of the one or more output devices 500 (see, e.g., Fig. 5).

In the embodiment shown in Fig. 5, the output device location data may comprise first output device location data associated with a first output device 510 and second output device location data associated with at least one second output device 520. The method may determine a pointing location 640 of the user-borne device 100 relative to the first output device 510 and the at least one second output device 520 based on the output device location data, more specifically the first output device location data and second output device location data, and the user-borne device location. The method 600 may further comprise determining, based on the virtual intersection point I and the output device location data, whether the virtual intersection point I is located on the first output device 510 or the second output device 520, or at a first distance d1 to the first output device 510 and/or at a second distance d2 to the second output device 520. The method 600 may comprise when determining, that the virtual intersection point I is located at the first distance d1 to the first output device 510 and/or at the second distance d2 to the second output device 520, determining a location of least distance dₗ on the first output device 510 or on the second output device 520 from the virtual intersection point I. In other words, the method 600 may comprise determining the first distance d1 and the second distance d2. Based on the first and second distances d1, d2, the method 600 may comprise determining whether a location on the first output device 510 is closer to the virtual intersection point I or whether a location on the second output device 520 is closer to the virtual intersection point I. Then, the method 600 may comprise mapping the pointing location to the closest location on the first output device 510 or on the second output device 520. Although two output devices 510, 520 are shown in this example, only one output device 510 may be provided or also more than two output devices may be provided.

Referring to Figs. 2 and 4, determining a pointing location 640 may comprise determining a pointing position 670 of the user-borne device 100 relative to the one or more output devices 500. More specifically, the pointing position may be indicative of position of the user-borne device 100 within the sensing volume M relative to the one or more output devices 500. The pointing position may be determined in addition to the pointing direction 190. In another embodiment the method 600 may only comprise determining a pointing position but not a pointing direction 190. This may be the case in an application where the at least one magnetic object 110 is arranged in a user-borne device 100 and is moved within the sensing volume M but does not require a pointing direction (e.g., as indicated in Fig. 4). Determining a pointing position 670 may comprise associating 671 the sensing volume M with the user-borne device location and/or segmenting 672 the sensing volume M into partial sensing volumes M1, M2. Determining a pointing position 670 may comprise associating the determined user-borne location with the partial sensing volumes M1, M2. Determining a pointing position 670 may comprise allocating 673 the partial sensing volumes M1, M2 to one or more virtual spaces associated with the one or more output devices 500. Determining a pointing position 670 may further comprise defining 674 the pointing position in one virtual space of the one or more virtual spaces depending on the user-borne device location within the sensing volume M, more specifically within one partial sensing volume M1, M2 associated with the one virtual space. In embodiments, each partial sensing volume M1, M2 may be associated with one virtual space. In embodiments, each output device of the one or more output devices 500 may define one virtual space. The number of partial sensing volumes M1, M2 may correspond to the number of output devices 500. In other embodiments, each output device of the one or more output devices 500 may define at least two virtual spaces. However, in some embodiments only one output device 510 may be provided comprising only one virtual space. In this case the sensing volume M may be allocated with the only one virtual space but may not be segmented into partial sensing volumes.

In the example of Fig. 4, the sensing volume M may be segmented into a first partial sensing volume M1 and a second partial sensing volume M2. The first partial sensing volume may be allocated with a first virtual space of a first output device 510. The second partial sensing volume M2 may be allocated with a second virtual space of a second output device 520. In case the determined user-borne location is within the first sensing volume M1, the pointing location may be in the first output device 510. In case the determined user-borne location is within the second sensing volume M2, the pointing location may be on the second output device 520. In other embodiments, only one output device 510 may be provided which may comprise the first virtual space and the second virtual space. The partitioning of the virtual spaces may correspond to the partitioning of the sensing volumes M1, M2. Although Fig. 4 illustrates a segmentation of the sensing volume M in the direction of the vertical reference axis Z, it should be noted that additionally or alternatively a segmentation of the sensing volume M in the direction of the first reference axis X or the second reference axis Y may also be possible.

As outlined above, in some embodiments the user-borne device 100 may be operable on an interaction surface 210, more specifically defined within the sensing volume M (see, e.g., Figs. 6 and 7). The method may comprise determining an interaction surface location, wherein the interaction surface location may be indicative of an interaction surface position, an interaction surface orientation and/or an interaction surface distance relative to the reference coordinate system XYZ, more specifically to the magnetometer plane 310. The method 600 may comprise determining the user-borne device location 630 relative to the interaction surface 210 based on the interaction surface location. Determining the pointing location 600 may be based on determining the user-borne device location 630 relative to the interaction surface location. In other words, this may be an embodiment, e.g., wherein the user-borne device 100 may be a computer mouse operable on the interaction surface 210. The pointing location, more specifically the pointing position, may be determined based on a position of the user-borne device 100 relative to the interaction surface 210. A translation of the user-borne device 100 in a direction on the interaction surface 210 may be represented as a translation of the pointing position on the one or more output devices 500.

Determining 650 that the user-borne device 100 is interacting on one output device of the one or more output devices 500 may comprise selecting one output device of the one or more output devices 500 based on the determined pointing location. More specifically, determining 650 that the user-borne device 100 is interacting on one output device of the one or more output devices 500 may comprise moving the user-borne device 100 directly on the selected output device. The method 600 may further comprise representing 680 the user-borne device 100 on one output device based on determining 650 that the user-borne device 100 is interacting on one output device of the one or more output devices 500. More specifically, representing 680 the user-borne device 100 on one output device may comprise reproducing the user-borne device 100 as a virtual object one the selected output device. In embodiments, the user-borne device 100 may be visually reproduced as a virtual object. In embodiments, the one or more output devices 510 may be configured to visually reproduce the virtual object. Representing 680 the user-borne device 100 may further comprise reproducing a movement of the user-borne device 100 within the sensing volume M as a movement of the virtual object on the selected output device. The movement of the user-borne device 100 within the sensing volume M may be caused by a manipulation of the user-borne device 100 during a user operation (i.e., by a user manipulating the location of the user-borne device 100). In other words, the movement of the user-borne location may be determined and reproduced as a movement of the virtual object on the selected output device. The visual reproduction may be a motion of a cursor on the selected output device. In embodiments, the visual reproduction may not be identical to the design of the user-borne device 100 but may be any icon (e.g., an arrow, a picture). In embodiments, the visual reproduction may be a drawing or letters. In other embodiments, the visual reproduction may be a color change and/or a brightness change of the selected output device (e.g., the selected output device may become brighter or darker). In some embodiments, a selected output device may be changed from an off-state to an on-state. As soon as the pointing location leaves the selected output device (e.g., based on a manipulation of a user-borne device 100 by a user U), for instance wherein the pointing location is in another direction and wherein another output device may be selected, the previous selected output device may be changed from the on-state to the off-state. In an embodiment, the selected output device may be changed from a locked state (e.g., wherein an action may not permitted on an output device) to an unlocked state (e.g., wherein an action may be permitted on an output device). As soon as the pointing location leaves the selected output device such that another output device may be selected, the previous selected output device may be changed from the unlocked state to the locked state. In case more than one output device is provided, non-selected output devices may remain in the off state. In embodiments, the one or more output devices 500 may be a visual screen or a display. In some embodiments, the one or more output devices 500 may be a light indicator device or an audio device. In embodiments, the user-borne device 100 may be a computer mouse, a keyboard, a toy, a stylus, a dial or a pointer.

The computer-implemented method 600 may further comprise initializing the plurality of magnetometers 300 and the user-borne device 100, more specifically when a user starts a user operation. In embodiments, the user-borne device 100 may be tracked over a time period comprising multiple time samples. At each time sample, the computer-implemented method 600 may comprise determining the user-borne device location 630 and/or determining the pointing location 640 and/or determining 650 that the user-borne device 100 is interacting on one output device, and may store the determined locations (or interactions) for each time sample.

In embodiments, the computer-implemented method 600 may further comprise applying a filter for filtering the determined user-borne device location. Magnetic and electronic noise, as well as environmental variations may lead to non-smooth location determinations over time. Based on the filtering, a smooth location trajectory of the user-borne device relative to the reference coordinate system XYZ and/or to interaction surface 210 may be achieved. The filter may be a low-pass filter or a Kalman filter, more specifically an extended Kalman filter or an unscented Kalman filter. The filter may use the magnetic field measurements of the plurality of magnetometers 300 as an input and may implement the mathematical model as described above to approximate the at least one magnetic object 110 by a magnetic dipole.

According to an aspect of the present disclosure, a computer system may be configured to execute the computer-implemented method 600 as described above. According to another aspect of the present disclosure a computer program may be configured to execute the computer-implemented method 600 as described above. Furthermore, a computer-readable medium or signal storing the computer program may be provided.

Figs. 3 to 7 are schematic views of a system 10 for controlling a representation of a user-borne device 100 with respect to one or more output devices 500 according to a second aspect of the present disclosure. Referring to Fig. 3, the system 10 comprises a user-borne device 100 comprising at least one magnetic object 110, a plurality of magnetometers 300 configured to perform magnetic field measurements associated with the at least one magnetic object 110, and one or more output devices 500. The system 10 is configured to execute a computer-implemented method 600 according to the first aspect of the present disclosure as described above. The system may provide a reliable and accurate control of a representation of a user-borne device relative to one or more output devices 500. Furthermore, the system can provide a solution to control a representation of a user-borne device 100, more specifically an electrically and/or electronically passive user-borne device 100, with respect to more than one output devices 500. As indicated in the embodiment of Fig. 3, the system 10 may further comprise a processing unit 400 configured to execute the computer-implemented method 600 according to the first aspect of the present disclosure. However, in other embodiments, the system 10 may be connectable to an external processing unit configured to execute the computer-implemented method 600 according to the first aspect of the present disclosure. The system 10 may be configured to track a movement of the at least one magnetic object 110 and/or the user-borne device 100 in at least five degrees of freedom. The at least five degrees of freedom may include a translation of the at least one magnetic object 110 along the first reference axis X, the second reference axis Y and the vertical reference axis Z, a first rotation about a first rotation axis, and a second rotation about a second rotation axis. In case the user-borne device 100 is operated on an interaction surface 210, the system 10 may be configured to assume a contact between the user-borne device 100 and the interaction surface 210. This may be done based on the determined user-borne device location and the interaction surface location as described above. During a user operation, the system 10 may be configured to track a movement of the user-borne device 100 within the sensing volume M and/or relative to the interaction surface 210 over a time period. More specifically the system 10 may be configured to determine a trajectory of the user-borne device 100 within the sensing volume M and/or relative to the interaction surface 210. In embodiments, the user-borne device 100 may be tracked over a time period comprising multiple time samples. At each time sample, the location of the user-borne device 100 within the sensing volume M and/or relative to the interaction surface 210 may be determined.

The above-described computer-implemented method 600 can comprise or be executable via a computer or a network of computers, the computer or network of computers comprising at least one processing unit (e.g., a processor) and at least one data storage (i.e., memory). The described procedural logic may be held in the form of executable code in at least one data storage and executed by the at least one processing unit. The systems and subsystems may send data to the at least one processing unit and, in examples, they may also receive instructions from the at least one processing unit. The processing unit may thereby direct user-initiated and/or automatically generated queries to the system 10. The system 10 is not limited to a particular hardware environment. Thus, distributed devices coupled via a network may perform the techniques described herein. The disclosure also includes electrical signals and computer-readable media defining instructions that, when executed by a processing unit, implement the techniques described herein. As described above, the system 10 may comprise at least one database. Alternatively, or in addition, the system 10 may access a database in a cloud (via a communication interface). The system 10 may comprise a (at least one) communication interface to couple to plurality of magnetometers, the processing unit and/or the database. The communication interface may comprise one or more of a network, internet, a local area network, a wireless local area network, a broadband cellular network, and/or a wired network. In examples, the system 10 may couple to one or more features via a server hosted in a cloud.

Referring to Fig. 6, a movement of the user-borne device 100 on the interaction surface 10 is indicated. In this embodiment, the user-borne device 100 may be a computer mouse. During a user operation, the user-borne device 100 may be moved on the interaction surface 210 from a position x_{d}, y_{d}, to a position dx_{d}, dy_{d}. The system 10 may be configured to track this movement based on determining the user-borne device location.

As outlined above, the plurality of magnetometers 300 may be configured to measure a magnetic field associated with the at least one magnetic object 110. The at least one magnetic object 100 may be arranged within or coupled to the user-borne device 100. As outlined above, each magnetometer of the plurality of magnetometers 300 may be configured to measure the magnetic field associated with the at least one magnetic object 110 in the direction of the first reference axis X, the second reference axis Y, and/or the vertical reference axis Z. In other words, each magnetometer of the plurality of magnetometers 300 may be configured to perform magnetic field measurements in the direction of one axis (i.e., one dimension), two axes (i.e., two dimensions), or three axes (i.e., three dimensions). The number of magnetometers provided may depend on the size of the interaction surface 210, on which the user-borne device 100 is operated, or, on the desired size of the sensing volume M within which the user-borne device 100 is operated. The plurality of magnetometers 300 may be configured to collect magnetic field measurements associated with the at least one magnetic object 110 within the sensing volume M up to a maximum measurement distance. In embodiments, the maximum measurement distance may be 18cm, more specifically 15cm. In embodiments, the maximum measurement distance may be defined between a furthest point on the interaction surface 210 or within the sensing volume M to a closest magnetometer of the plurality of magnetometers 300.

The plurality of magnetometers 300 may be fixedly arranged in a magnetometer body 320 (see, e.g., Fig. 5) defining a fixed position and/or orientation of the plurality of magnetometers (300) with respect to each other. The magnetometer plane 310 may be defined by a plane that extends through a majority of the plurality of magnetometers 300. More specifically, the magnetometer plane 310 may extend through centers, more specifically geometric centers, of a majority of the plurality of magnetometers 300. In other words, most of the magnetometers of the plurality of magnetometers 300 may be arranged in a common plane, i.e., the magnetometer plane 310. However, one or more magnetometers of the plurality of magnetometers 300 may be distanced and/or inclined with respect to the common plane, e.g., due to manufacturing issues and/or tolerances. The magnetometer plane 310 may additionally or alternatively be defined by a plane in which the magnetometers of the plurality of magnetometers 300 are predominantly arranged.

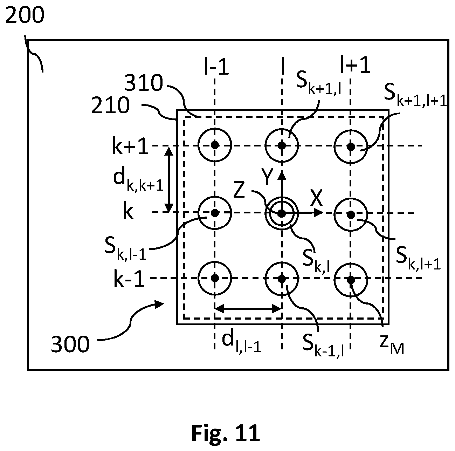

Referring to Fig. 11, an arrangement of the plurality of magnetometers with respect to the interaction surface 210 defined on an interaction support 200 is shown. In the embodiment shown in Fig. 11, the plurality of magnetometers 300 may be arranged in rows and columns. However, it is also possible that the plurality of magnetometers may be arranged in an unordered manner within the magnetometer body 320. A calibration procedure may be used to determine the exact locations and measurement axes of each magnetometer within the magnetometer body 320 relative to the reference coordinate system XYZ. The plurality of magnetometers 300 are shown in Fig. 11 as being arranged in the magnetometer plane 310 (i.e., in the same plane relative to the vertical reference axis Z). However, as outlined above, one or more of the magnetometers may be distanced to the magnetometer plane 310, more specifically distanced in the direction of the vertical reference axis Z.

In the arrangement of Fig. 11, the plurality of magnetometers 300 may be arranged in the magnetometer body 320 in rows k und columns l. Fig. 9 illustrates some magnetometers S_{k,l} of the plurality of magnetometers 300. Each magnetometer S_{k,l} may comprise a vertical magnetometer axis z_{M} which may be arranged on the intersections of the rows k and columns l. Adjacent magnetometers S_{k,l}, S_{k,l+1}, S_{k,l-1} may be separated along a row k by a distance d_{l,l+1} and d_{l,l-1}. Adjacent magnetometers S_{k,l}, S_{k+1,l}, S_{k-1,l} may be separated along a column l by a distance d_{k,k+1} and d_{k,k-1}. As outlined above, the distances dₖ, dₗ between the respective magnetometers S_{k,l} may be equal or may differ.

As already described above, the system 10 comprises one or more output devices 500. The one or more output devices 500 may be configured to represent, more specifically to visually reproduce, the user-borne device 100 as a virtual object. In embodiments, the output device 500 may be a visual screen or display. As shown in the embodiment of Fig. 3, the system 10 may comprise only one output device 510. As shown in the embodiment of Fig. 4, the system may comprise at least two output devices 500, more specifically a first output device 510 and a second output device 520. As shown in the embodiment of Fig. 6, the system may comprise a third output device 530. In other embodiments, the system 10 may comprise more than three output devices. The at least two output devices 500 may be arranged in rows or columns. In other embodiments, the at least two output devices 500 may be arranged at different orientations and/or positions with respect to each other.

The system 10 may comprise an electronics device 700. The one or more output devices 500 may be integrated in the electronics device 700. In embodiments, the electronics device 700 may be a tablet, a cell phone, a laptop, a computer, a virtual reality (VR) set or a television. In embodiments, the processing unit 400 may be integrated in the electronics device 700. Furthermore, the electronics device 700 may comprise a user interface configured to interact with a user U and/or receive a user input. In an embodiment, the user interface may be integrated into the one or more output devices 500. The plurality of magnetometers 300 may be configured to receive data from and/or transmit data to the processing unit 400 and/or the external processing unit. The system 10 may comprise a data storage connected to the processing unit 400. The data storage may comprise a primary data storage, e.g., a RAM, and a secondary data storage. The data storage may be integrated in and/or connected to the electronics device 700.

As indicated in Fig. 6, the system 10 may comprise an interaction support 200 having an interaction support surface 230. The interaction surface 210 may be at least a partial surface of the interaction support surface 230. The interaction support 200 may not comprise ferromagnetic properties, e.g., ferromagnetic particles. In embodiments, the interaction support 200 may be a furniture (e.g., a table), a notebook, an electronics device, a screen, a wall, or a mouse pad. The interaction surface 210 may be defined based on a first set of geometric parameters associated with the interaction support 200. More specifically, the type of interaction support 200 may be known, e.g., a notebook or mouse pad. Such an interaction support 200 may be defined by a set of predefined geometric parameters. A partial surface of the interaction support surface 230 may be used as interaction surface 210.

The plurality of magnetometers 300 may be electrically (e.g., via wires or a data bus) or wirelessly connected to the processing unit 400, the external processing unit and/or to the electronics device 700. In embodiments, the plurality of magnetometers 300 may be integrated in a wall, a furniture, a notebook, an electronics device 700, a screen, and/or a mouse pad. In case the plurality of magnetometers 300 is arranged in a wall, the interaction surface 210 may be a screen or display placed in front of the plurality of magnetometers 300. In embodiments, the interaction surface 210 may be defined on the one or more output devices 500.

Referring to Figs. 8A to 10B, the user-borne device 100 may comprise a housing 150. The at least one magnetic object 110 may be arranged in the housing 150. In other embodiments, the at least one magnetic object 110 may be coupled to the housing 150. In an initial state of the user-borne device 100, the relative magnetic object orientation relative to the user-borne device 210 may be defined based on the second set of inclination angles γ₁, γ₂, γ₃ as described above. More specifically, the second set of inclination angles γ₁, γ₂, γ₃ may be measured between the magnetic moment vector 120 and the respective axes of the device coordinate system. In an example as shown in Fig. 8A and 9A, γ₁ may be measured between the vertical device axis z_{d} and the magnetic moment vector 120. In an initial state of the user-borne device 100, the magnetic moment vector 120 may be inclined with respect to the vertical device axis z_{d}.

However, in other embodiments e.g., as shown in Fig. 8B, in an initial state of the user-borne device 100, the magnetic moment vector 120 may extend substantially parallel to the vertical device axis z_{d}. In an embodiment, in the initial state of the user-borne device 100, the at least one magnetic object 100 may be arranged in the housing 150 such that the vertical device axis z_{d} extends through the magnetic moment vector 120. However, in other embodiments, in the initial state of the user-borne device 100, the at least one magnetic object 110 may be arranged in the housing 150 such that the magnetic moment vector 120 is parallel but distanced to the vertical device axis z_{d} (see, e.g., Fig. 8B).

The at least one magnetic object 110 may be movable relative to the user-borne device 100, more specifically wherein the at least one magnetic object 110 may be rotatable and/or translatable relative to the user-borne device 100 (and/or to the housing 150). The user-borne device 100 may be in an initial state, when the at least one magnetic object 110 is in an initial location relative to the user-borne device 100, more specifically to the housing 150. In other words, the user-borne device 100 may be in an initial state, when the at least one magnetic object 110 is not rotated and/or translated relative to the user-borne device 100. As mentioned above, the device coordinate system may be defined in a geometric center of the user-borne device 100. In the initial state, the at least one magnetic object 110 may be inclined and/or distanced with respect to the device coordinate system and/or to the geometric center of the user-borne device 100. The user-borne device 100 may be in an actuated state, when the at least one magnetic object 110 is in an actuated location relative to the initial location (and/or relative to the user-borne device 100 and/or to the housing 150). In other words, the user-borne device 100 may be in an actuated state, when the at least one magnetic object 110 is rotated and/or translated relative to the user-borne device 100, more specifically from the initial location. In the actuated state, the magnetic object orientation and/or the magnetic object position of the at least one magnetic object 110 relative to the device coordinate system may be different compared to the initial state.

As shown in Fig. 8B, the user-borne device 100 may comprise at least two magnetic objects 110a, 110b having different relative orientations to each other. The system 10 may be configured to determine relative magnetic object orientations of each of the at least two magnetic objects 110a, 110b. More specifically, the system 10 may be configured to determine a magnetic moment vector 120a, 120b of each of the at least two magnetic objects 110a, 110b. Furthermore, the system 10 may be configured to determine a magnetic object position, a magnetic object orientation and/or a magnetic object distance of each of the at least two magnetic objects 110a, 110b relative to the reference coordinate system XYZ, more specifically the magnetometer plane 310, and/or to the interaction surface 210. As shown in Fig. 8B a first magnetic object 110a may comprise a first magnetic moment vector 120a. A second magnetic object 110b may comprise a second magnetic moment vector 120b. The first magnetic moment vector 120a may be inclined with respect to the second magnetic moment vector 120b. In the example shown in Fig. 8B, the first magnetic moment vector 120a may be substantially orthogonal to the second magnetic moment vector 120b. The first magnetic object 110a may be fixedly coupled to the user-borne device 100. This means that the first magnetic object 110a may not be rotatable and/or translatable with respect to the user-borne device 100. The first magnetic object 110b may be arranged in the housing 150. The second magnetic object 110b may be rotatable and/or translatable relative to the user-borne device 100 and/or to the first magnetic object 110a. The system 10 may be configured to track a movement of the at least two magnetic objects 110a, 110b in at least six degrees of freedom. In addition to the at least five degrees of freedom as defined above, the user-borne device 100 comprising at least two magnetic objects 110a, 110b allows to determine a relative position and/or a relative orientation deviation of the two at least two magnetic objects 110a, 110b with respect to each other.

Fig. 8B illustrates a translation 160 of the at least one magnetic object relative to the device coordinate system from an initial location to an actuated location. In the example of Fig. 8B, a second magnetic object 110b may arranged in the housing 150, which is translated from an initial location to an actuated location. The second magnetic object 110b is translated in the direction of the first device axis x_{d} and in the direction of the vertical device axis z_{d}. Such a translation 160 from the initial location to the actuated location may be described by dxₘ and dzₘ as indicated in Fig. 8B. Although described only for the second magnetic object 110b, the features described above may analogously apply for the at least one magnetic object 110. In the embodiment shown in Fig. 5, the at least one magnetic object 110 may be fixedly arranged in the housing 150. In this case, the at least one magnetic object 110 may not be translatable 160 and/or rotatable with respect to the user-borne device 100 (and/or the housing 150).

Referring to Figs. 9A to 10B, a rotation of the at least one magnetic object 110 relative to the user-borne device 100 and/or to the housing 150 is shown. In Figs. 9A and 9B, the at least one magnetic object 110 may be rotated by a first rotation 170 from the initial location to an actuated location about the second device axis y_{d}. It should be noted that in the embodiment of Fig. 9A, in the initial state, the at least one magnetic object 110 is inclined by angle γ1 measured between the magnetic moment vector 120 and the vertical device axis z_{d}. In other words, in its initial location, the at least one magnetic object 110 may be arranged inclined with respect to the vertical device axis z_{d}. As shown in Figs. 9A and 9B, the first rotation 170 may be defined by a first rotation angle α₁ measured between the initial location (i.e., an initial position and/or orientation of the magnetic moment vector in the initial state) and the magnetic moment vector 120. In Fig. 9A, the first rotation angle α₁ may comprise a positive value. In Fig. 9B the first rotation angle α₁ may comprise a negative value.

In the embodiment shown in Figs. 10A and 10B, in its initial location and/or state, the at least one magnetic object 110 may comprise a magnetic moment vector 120 which is parallel to the vertical device axis z_{d}. In other words, an inclination angle γ2 about the first device axis x_{d} may be zero. The at least one magnetic object 110 may be rotated by a second rotation 180 from the initial location to an actuated location about the first device axis x_{d}. Such a second rotation 180 may be defined by a second rotation angle α₂ measured between the vertical device axis z_{d} and the magnetic moment vector 120. In Fig. 10A, the second rotation angle α₂ may comprise a positive value, and in Fig. 10B the second rotation angle α₂ may comprise a negative value. Although not explicitly shown in the Figs., it should be understood that a combination of a rotation 170, 180 and/or a translation 160 as described above is also possible. The translation 160 of the at least one magnetic object 110 from the initial location to the actuated location is only shown in the example of Fig. 8B in the direction of the first device axis x_{d} and the vertical device axis z_{d}. However, any combination of translations with respect to the device axes x_{d}, y_{d}, z_{d} may be possible, more specifically along the first device axis x_{d}, the second device axis y_{d} and/or the vertical device axis z_{d}. The system 10 may be configured to detect the translation 160 and/or rotation 170, 180 of the at least one magnetic object 110 relative to the user-borne device 100.

As indicated in Figs. 6 and 8A to 10B, the user-borne device 100 may comprise at least one manipulation feature 140, more specifically coupled to the housing 150. The at least one manipulation feature 140 may be translatable and/or rotatable with respect to the user-borne device 100, more specifically to the housing 150. The at least one magnetic object 110 may be coupled to the at least one manipulation feature 140. More specifically, the at least one magnetic object 110 may be operationally, e.g., mechanically, coupled to the at least one manipulation feature 140. A translation and/or rotation of the at least one manipulation feature 140 relative to the housing 150 may cause a translation and/or a rotation of the at least one magnetic object 110 relative to the housing 150. The at least one manipulation feature 140 may be actuated by a user. In an initial state of the user-borne device 100, the at least one manipulation feature 140 and/or the at least one magnetic object 110 may be in the initial location. In an actuated state of the user-borne device 100, the at least one manipulation feature 140 and/or the at least one magnetic object 110 may be in the actuated location. In other words, in case the at least one manipulation feature 140 is not actuated by user, the user-borne device may be in the initial state. More specifically, in the initial state, the at least one manipulation feature 140 and/or the at least one magnetic object 110 may be in the initial location. In case the at least one manipulation feature 140 is actuated by user, the user-borne device 100 may be in the actuated state. More specifically, in the actuated state, the at least one manipulation feature 140 and/or the at least one magnetic object 110 may be in the actuated location. Referring to the examples shown in Figs. 9A and 9B, an actuation of the at least one manipulation feature 140 may lead to the first rotation 170 about the second device axis y_{d} as described above. Depending on a direction of an actuation of the at least one manipulation feature 140, the first rotation angle α₁ may have a positive value or the negative value. Additionally or alternatively, referring to Figs. 10A and 10B, an actuation of the at least one manipulation feature 140 may lead to the second rotation 180 about the first device axis x_{d} as described above. Depending on a direction of an actuation of the at least one manipulation feature 140, the second rotation angle α₂ may have a positive value or a negative value. Referring to Fig. 8B, an actuation of the at least one manipulation feature 140 may lead to a translation 160 of the at least one magnetic object 110 along the first device axis x_{d}, the second device axis y_{d}, and/or the vertical device axis z_{d}. As defined above, the method 600 comprises detecting a position and/or orientation deviation 635. In embodiments, the detected orientation deviation may be the first rotation angle α₁ and/or the second rotation angle α₂.

The user-borne device 100 may comprise a biasing element (not shown), configured to urge the at least one manipulation feature 140 and/or at least one magnetic object 110 from the actuated location to the initial location, more specifically when the at least one manipulation feature 140 is not actuated. More specifically, when a user actuates (e.g., applies a force on) the at least one manipulation feature 140, the at least one manipulation feature 140 and at least one magnetic object 110 may be moved from the initial location to the actuated location. In this case, the biasing element may be biased. When a user releases the force on the at least one manipulation feature 140, the at least one manipulation feature 140 and the at least one magnetic object 140 may be urged from the actuated location to the initial location.

The at least one manipulation feature 140 may be associated with at least one trigger event. The system 10 may be configured to determine the respective trigger event based on a translation 160 and/or rotation 170, 180 of the at least one magnetic object 110 relative to the user-borne device 100 as described above, more specifically caused by a translation of the at least one manipulation feature 140 being operationally coupled to the at least one magnetic object 110. More specifically, the system 10 may be configured to determine a position and/or rotation deviation between the initial location and the actuated location. In other words, a specific translation and/or rotation of the at least one magnetic object 110 relative to the user-borne device 100 may be detectable by the system 10. Based on the detected specific translation and/or rotation, the system 10 may be configured to transform this movement to a trigger event associated with the translation and/or rotation. In an example, the system 10 may be coupled to a database. The database may comprise data associating at least one trigger event with a specific translation and/or rotation of the at least one magnetic object 110 from the initial location to the actuated location. The system 10 may be configured to transmit to and/or receive data from the database. In the embodiments shown in Figs. 8A and 8B, the first rotation 170 may be associated with a first trigger event. In the embodiments shown in Figs. 8A and 8B, the second rotation 180 may be associated with a second trigger event. The respective trigger event may be, e.g., a click event, a scroll event, and/or a selection event. In case a plurality of magnetic objects is provided, additional trigger events may be determined based on a rotation and/or translation of the magnetic objects relative to each other and detectable by the system 10. The at least one trigger event may be initiated by a user manipulation of the user-borne device 100, more specifically the electrically and/or electronically user-borne device 100, within the sensing volume M. The at least one trigger event may cause an action and/or may be used to control an action in a digital environment (i.e., an environment which is controlled by a computer or a network of computers), e.g., a virtual environment, based on a user input. More specifically, the at least one trigger event may implement a user input on the user-borne device as an action in the digital environment. For instance, the at least one user-borne device 100 may be used together with an electronics device 700, e.g., a tablet, a cell phone, a laptop, a computer, a virtual reality (VR) set or a television. The at least one trigger event may cause an action on the electronics device 700 and/or may be used to control an action on the electronics device 700 based on a user input on the user-borne device 100.

As mentioned above, the at least one trigger event may be a scroll event and/or a click event. A scroll event and/or a click event may be applied to various different application fields. A scroll event may trigger a scroll action in a digital environment, more specifically a virtual environment, based on a user input, e.g., "scroll up" and "scroll down" on a display. A scroll event may cause or provide a control of a rotational and/or translational movement of a virtual object in a digital environment, more specifically a virtual environment, that is associated with a user input. For instance, a scroll event may trigger a scroll action including scrolling of files or data, a rotational or translational movement of the virtual object associated with a selection of a choice from a plurality of choices. The scroll action may also include rotating a body in a virtual environment and/or changing a perspective in a virtual environment. Furthermore, a scroll action may include one or more of moving a cursor in two opposing directions (e.g., horizontal or vertical on an output device), moving a displayed element (e.g. a page, a cursor), which may be controlled by the user-borne device 100, a step in a direction, flipping through a menu, flipping through a selection list, or adjusting (e.g. increasing or decreasing) a parameter (e.g. a setting or a configuration). A click event may trigger a click action (more specifically of a virtual object) in a digital environment, more specifically a virtual environment, based on a user input. A click event may include, e.g., a selection of an object (like a button, a file, an icon or another object), a selection of an item, a selection of a list, a selection of an item on a list. A click event may trigger a following action. A click event may trigger an action that provides additional information and/or properties of an object, an item or a text (e.g., letter, word, phrase) selected. A click event may trigger a single click action, a double click action, a triple click action, a right click action and/or a click-and-drag action within a digital environment, more specifically a virtual environment. A single click action may refer to selection of an object within a virtual environment. A double click action may open a file or execute a program within a virtual environment. A click-and-drag action may include clicking, holding and moving an object, e.g., which may be used to highlight or drag-select a text or an object. A triple click action may be used to select a paragraph of a text. A right click action may perform a special action, e.g., opening a list with additional information and/or properties for a selected object as mentioned above. The action that is triggered by the click event depends on the user's input on the user-borne device 100. For example, the click event may cause a double-click action when a user provides two quick and successive inputs on the user-borne device 100. The above-mentioned features enables various new application fields for the user-borne device 100, for example a computer-mouse, a keyboard, a dial, a mouse scroll element (e.g. a wheel), a joystick, a control for an electronic device (e.g. an audio control or a visual control), a control of software settings or visualizations (e.g. graphic software or design software), or a control of a computer game.

In an example as shown in Figs. 6 and 8A to 10B, a first manipulation feature 140a may be provided and a second manipulation feature 140b may be provided. Each of the first and second manipulation features 140a, 140b may be operationally coupled to the at least one magnetic object 110. In this example, the user-borne device 100 may be, e.g., a computer mouse. The first manipulation feature 140a may be a click manipulation feature and the second manipulation feature 140b may be a scroll manipulation feature. Actuating the first manipulation feature 140a may lead to the first rotation 170 of the at least one magnetic object 110. Depending on the direction of the actuation, the first rotation angle α₁ may comprise a positive value or a negative value. The system 10 may be configured to detect the first rotation angle α₁ and may transform this rotation into a click event comprising a first click event or a second click event, depending on the first rotation angle value. The first click event may trigger a left click action more specifically a single click action, a double click action, a triple click action, and/or a click-and-drag action as described above. The second click event may trigger the right click action as described above. Actuating the second manipulation feature 140b may lead to the second rotation 180 of the at least one magnetic object 110. Depending on the actuation, the second rotation angle α₂ may comprise a positive value or a negative value. The system 10 may be configured to detect the second rotation angle α₂ and may transform this rotation into a scroll event. The scroll event may comprise a first scroll event or a second scroll event. The respective scroll event may depend on the second rotation angle value. More specifically, the first rotation 170 may be associated with a click event. In case the first rotation angle α₁ has a positive value, this may be associated with a first click event. In case the first rotation angle α₁ has a negative value, this may be associated with a second click event. The second rotation 180 may be associated with a scroll event. In case the second rotation angle α₂ has a positive value, this may be associated with a first scroll event (e.g.. a "scroll up"). In case the second rotation angle α₂ has a negative value, this may be associated with a second scroll event (e.g., a "scroll down").

As outlined above, the at least one trigger event may cause an action and/or may be used to control an action in a digital environment, more specifically a virtual environment, based on a user input. Furthermore, the user-borne device 100 may be reproduced as a virtual object in the virtual environment. The electronics device 700 may be a VR set, more specifically an XR headset which may be a device worn on a user's head and configured to allow a user to experience virtual environments in real life (virtual reality environment, or VR environment). In an embodiment, the user-borne device 100 may be reproduced as a virtual object in the VR environment allowing a user U to recognize where the user-borne device 100 is located. A plurality of magnetometers 300 may be provided creating a sensing volume M in which the user-borne device 100 is operated. The user-borne device location as defined above may be indicative of an orientation and/or a position of the user borne device 100 relative to the reference coordinate system XYZ, more specifically to the plurality of magnetometers 300. The reference coordinate system XYZ may be fixed in the VR environment. A position and/or an orientation of the user-borne device 100 may be computed relative to the VR set, more specifically to the XR headset, and may be reproduced, particularly displayed, to the user via the XR headset. In some embodiments, the reference coordinate system XYZ may be dynamically evaluated from a tracking of the VR environment of the XR headset. In embodiments, it may be possible to provide an additional tracking system being fixed to the plurality of magnetometer 300 such as IR tracking, electromagnetic tracking or camera-based tracking. The at least one trigger event (e.g., a click event or a scroll event) and the caused action may also be represented in the VR environment more specifically may be displayed to a user U via a display arranged in the XR headset. The representation in the VR environment may be done by changing a rendering parameter of the user-borne device 100, for instance color or light, and/or adding a specific sound. In some embodiments, the interaction surface 210 may be modeled in the VR environment, displayed to a user via the XR headset and/or used as an input to represent an interaction between the user-borne device 100 and the interaction surface 210 within the VR environment (e.g., representing the user-borne device 100 being operated on the interaction surface 210 within the VR environment). In embodiments, the one or more output devices 500 may be represented in the virtual environment. In some embodiments, the one or more output devices 500 may be represented as virtual displays or screens in the VR environment. Determining the pointing location 640, determining 650 that the user-borne device 100 is interacting on one output device of the one or more output devices 500 based on the determined pointing location, and/or representing 680 the user-borne device 100on one output device as described above may be done with respect to the one or more output devices 500 being represented, more specifically as virtual displays or screens, in the VR environment. Thus, an interaction of the user-borne device 100 with respect to the one or more output devices 500 being represented in the VR environment may be displayed to a user U via the XR headset.

In some embodiments, more than one user-borne devices 100 may be provided and operated (e.g., manipulated by a user U) within the sensing volume M created by the plurality of magnetometers 300. Although the computer-implemented method 600 and the system 10 according to the present disclosure have been described for one user-borne device 100, the features as described above may also be applicable to every additional or other user-borne device 100 operated within the sensing volume M.

### REFERENCE NUMERALS

- X: first reference axis
- Y: second reference axis
- Z: vertical reference axis
- x_{d}: first device axis
- y_{d}: second device axis
- z_{d}: vertical device axis
- 10: system
- 100: user-borne device
- 110: at least one magnetic object
- 120: magnetic moment vector
- 130: contact surface or point
- 140: at least one interaction feature
- 150: housing
- 160: translation of magnetic object
- 170: first rotation
- 180: second rotation
- 200: interaction support
- 210: interaction surface
- 230: interaction support surface
- 300: plurality of magnetometers
- 310: magnetometer plane
- 320: magnetometer body
- 400: processing unit
- 500: one or more output devices
- 510: first output device
- 520: second output device
- 530: third output device
- 700: electronics device
- U: user
- α₁: first rotation angle
- α₂: second rotation angle
- S_{k,l}: magnetometer
- δ₁, δ₂, δ₃: first set of inclination angles
- γ₁, γ₂, γ₃: second set of inclination angles
- β₁, β₂, β₃: third set of interaction surface inclination angles

## Claims

1. A computer-implemented method (600) for controlling a representation of a user-borne device (100) with respect to one or more output devices (500), comprising:
- obtaining magnetic field measurements (610) associated with at least one magnetic object (110) and measured with a plurality of magnetometers (300), wherein the at least one magnetic object (110) is coupled to a user-borne device (100),
- obtaining output device location data (620) indicative of an output device location of one or more output devices (500) relative to the plurality of magnetometers (300),
- determining a user-borne device location (630) based on the collected magnetic field measurements,
- determining a pointing location (640) of the user-borne device (100) relative to the one or more output devices (500) based on the output device location data and the user-borne device location, wherein determining the pointing location (640) comprises determining a pointing direction (660) and a pointing position (670) of the user-borne device (100) relative to the one or more output devices (500), and
- determining (650) that the user-borne device (100) is interacting on one output device of the one or more output devices (500) based on the determined pointing location, which comprises selecting one output device of the one or more output devices (500) based on the determined pointing location.

2. The computer-implemented method (600) according to claim **1,** wherein the plurality of magnetometers (300) is associated with a magnetometer plane (310), more specifically wherein the magnetometer plane (310) is defined by a plane that extends through a majority of the plurality of magnetometers (300).

3. The computer-implemented method (600) according to claim 2, comprising:
defining a reference coordinate system (XYZ) relative to the plurality of magnetometers (300), the reference coordinate system (XYZ) comprising a first reference axis (X), a second reference axis (Y) and a vertical reference axis (Z), wherein the first reference axis (X) and the second reference axis (Y) are orthogonal to each other, and wherein the vertical reference axis (Z) is orthogonal to the first reference axis (X) and the second reference axis (Y) and extends through a center of the plurality of magnetometers (300), optionally wherein the first reference axis (X) and the second reference axis (Y) are defined on the magnetometer plane (310), and wherein the vertical reference axis (Z) is orthogonal to the magnetometer plane (310).

4. The computer-implemented method (600) according to any one of the preceding claims, wherein output device location data comprises a set of output device location parameters indicative of a geometric position, a geometric orientation and/or a geometric distance of the one or more output devices (500) relative to the plurality of magnetometers (300).

5. The computer-implemented method (600) according to claim 4, when dependent on claim 3, wherein the set of device location parameters is indicative of a geometric position, a geometric orientation and/or a geometric distance relative to the reference coordinate system (XYZ) and/or to the magnetometer plane (310).

6. The computer-implemented method (600) according to any one of claims 3 to 5, wherein determining a user-borne device location (630) comprises:
determining an absolute magnetic object location (631) indicative of an absolute magnetic object position and/or an absolute magnetic object orientation of the at least one magnetic object (110) relative to the reference coordinate system (XYZ), more specifically wherein the absolute magnetic object location is determined based on the obtained magnetic field measurements.

7. The computer-implemented method (600) according to claim 6, wherein the absolute magnetic object location includes a magnetic moment vector (120) and/or a magnetic position vector associated with the at least one magnetic object (110), wherein the magnetic moment vector (120) is indicative of a magnetic object orientation and/or wherein the magnetic position vector is indicative of a magnetic object position with respect to the reference coordinate system (XYZ).

8. The computer-implemented method (600) according to any one of the preceding claims, wherein determining a user-borne device location (630) comprises:
determining a relative magnetic object location (634) indicative of a relative magnetic object position and/or a relative magnetic object orientation of the at least one magnetic object (110) relative to the user-borne device (110), more specifically to a device coordinate system.

9. The computer-implemented method (600) according to claim 8, wherein determining a relative magnetic object location (634) comprises:
detecting a position and/or orientation deviation (635) of the relative magnetic object position and/or a relative magnetic object orientation caused by a translation and/or a rotation of the at least one magnetic object (110) relative to the user-borne device (100), more specifically wherein the user-borne device (100) is in an actuated state, and
in response to detecting the position and/or orientation deviation, determining at least one trigger event (636) associated with the position and/or the orientation deviation.

10. The computer-implemented method (600) according to any one of the preceding claims, wherein determining a user-borne device location (630) comprises:
defining a capturing position (637) relative to the user-borne device (100), more specifically wherein the capturing position (191) is defined with respect to a device coordinate system, and
determining the user-borne device location (630) relative to the capturing position.

11. The computer-implemented method (600) according to any one of the preceding claims, wherein the one or more output devices (500) defines an output device plane (501), and wherein determining a pointing location (640) comprises:
determining (664) a virtual intersection point (I) of the pointing direction (190) and the output device plane (501).

12. The computer-implemented method (600) according to any one of the preceding claims, wherein the pointing position is indicative of a position of the user-borne device (100) within the sensing volume (M) relative to the one or more output devices (500).

13. The computer-implemented method (600) according to any one of the preceding claims, wherein determining (650) that the user-borne device (100) is interacting on one output device of the one or more output devices (500) comprises:
moving the user-borne device (100) directly on the selected output device.

14. A system (10) for controlling a representation of a user-borne device (100) with respect to one or more output devices (500), comprising:
the user-borne device (100) comprising at least one magnetic object (110),
a plurality of magnetometers (300) configured to perform magnetic field measurements associated with the at least one magnetic object (110), and
one or more output devices (500),
wherein the system (10) is configured to execute a computer-implemented method (600) according to any one of claims 1 to 13.

## Patentansprüche

1. Computerimplementiertes Verfahren (600) zum Steuern einer Darstellung einer benutzergetragenen Vorrichtung (100) in Bezug auf eine oder mehrere Ausgabevorrichtungen (500), umfassend:
- Erhalten von Magnetfeldmessungen (610), die mindestens einem magnetischen Objekt (110) zugeordnet sind und mit einer Vielzahl von Magnetometern (300) gemessen werden, wobei das mindestens eine magnetische Objekt (110) mit einer benutzergetragenen Vorrichtung (100) gekoppelt ist,
- Erhalten von Ausgabevorrichtungsstandortdaten (620), die einen Ausgabevorrichtungsstandort eines oder mehrerer Ausgabevorrichtungen (500) relativ zu der Vielzahl von Magnetometern (300) angeben,
- Bestimmen eines Standorts (630) der benutzergetragenen Vorrichtung basierend auf den gesammelten Magnetfeldmessungen,
- Bestimmen eines Zeigestandorts (640) der benutzergetragenen Vorrichtung (100) relativ zu dem einen oder den mehreren Ausgabevorrichtungen (500) basierend auf den Ausgabevorrichtungsstandortdaten und dem Standort der benutzergetragenen Vorrichtung, wobei das Bestimmen des Zeigestandorts (640) das Bestimmen einer Zeigerichtung (660) und einer Zeigeposition (670) der benutzergetragenen Vorrichtung (100) relativ zu der einen oder den mehreren Ausgabevorrichtungen (500) umfasst, und
- Bestimmen (650), dass die benutzergetragene Vorrichtung (100) basierend auf dem bestimmten Zeigestandort mit einer Ausgabevorrichtung der einen oder der mehreren Ausgabevorrichtungen (500) interagiert, was ein Auswählen einer Ausgabevorrichtung der einen oder der mehreren Ausgabevorrichtungen (500) basierend auf dem bestimmten Zeigestandort umfasst.

2. Computerimplementiertes Verfahren (600) nach Anspruch 1, wobei die Vielzahl von Magnetometern (300) einer Magnetometerebene (310) zugeordnet ist, und wobei die Magnetometerebene (310) insbesondere durch eine Ebene definiert ist, die sich durch eine Mehrheit der Vielzahl von Magnetometern (300) hindurch erstreckt.

3. Computerimplementiertes Verfahren (600) nach Anspruch 2, umfassend: Definieren eines Referenzkoordinatensystems (XYZ) relativ zu der Vielzahl von Magnetometern (300), das Referenzkoordinatensystem (XYZ) umfassend eine erste Referenzachse (X), eine zweite Referenzachse (Y) und eine vertikale Referenzachse (Z), wobei die erste Referenzachse (X) und die zweite Referenzachse (Y) orthogonal zueinander sind und wobei die vertikale Referenzachse (Z) orthogonal zu der ersten Referenzachse (X) und der zweiten Referenzachse (Y) ist und sich durch eine Mitte der Vielzahl von Magnetometern (300) hindurch erstreckt, wobei optional die erste Referenzachse (X) und die zweite Referenzachse (Y) auf der Magnetometerebene (310) definiert sind, und wobei die vertikale Referenzachse (Z) orthogonal zu der Magnetometerebene (310) ist.

4. Computerimplementiertes Verfahren (600) nach einem der vorstehenden Ansprüche, wobei die Ausgabevorrichtungsstandortdaten einen Satz von Ausgabevorrichtungsstandortparametern umfassen, die eine geometrische Position, eine geometrische Ausrichtung und/oder einen geometrischen Abstand der einen oder der mehreren Ausgabevorrichtungen (500) relativ zu der Vielzahl von Magnetometern (300) angeben.

5. Computerimplementiertes Verfahren (600) nach Anspruch 4, wenn abhängig von Anspruch 3, wobei der Satz von Vorrichtungsstandortparametern eine geometrische Position, eine geometrische Ausrichtung und/oder einen geometrischen Abstand relativ zu dem Referenzkoordinatensystem (XYZ) und/oder zu der Magnetometerebene (310) angibt.

6. Computerimplementiertes Verfahren (600) nach einem der Ansprüche 3 bis 5, wobei das Bestimmen eines Standorts (630) der benutzergetragenen Vorrichtung umfasst:
Bestimmen eines absoluten magnetischen Objektstandorts (631), der eine absolute magnetische Objektposition und/oder eine absolute magnetische Objektausrichtung des mindestens einen magnetischen Objekts (110) relativ zu dem Referenzkoordinatensystem (XYZ) angibt, wobei insbesondere der absolute magnetische Objektstandort basierend auf den erhaltenen Magnetfeldmessungen bestimmt wird.

7. Computerimplementiertes Verfahren (600) nach Anspruch 6, wobei der absolute magnetische Objektstandort einen magnetischen Momentvektor (120) und/oder einen magnetischen Positionsvektor einschließt, der dem mindestens einen magnetischen Objekt (110) zugeordnet ist, wobei der magnetische Momentvektor (120) eine magnetische Objektausrichtung angibt und/oder wobei der magnetische Positionsvektor eine magnetische Objektposition in Bezug auf das Referenzkoordinatensystem (XYZ) angibt.

8. Computerimplementiertes Verfahren (600) nach einem der vorstehenden Ansprüche, wobei das Bestimmen eines Standorts (630) der benutzergetragenen Vorrichtung umfasst:
Bestimmen einer relativen magnetischen Objektposition (634), die eine relative magnetische Objektposition und/oder eine relative magnetische Objektausrichtung des mindestens einen magnetischen Objekts (110) relativ zu der benutzergetragenen Vorrichtung (110), genauer gesagt zu einem Vorrichtungskoordinatensystem, angibt.

9. Computerimplementiertes Verfahren (600) nach Anspruch 8, wobei das Bestimmen eines relativen magnetischen Objektstandorts (634) umfasst:
Erkennen einer Positions- und/oder Ausrichtungsabweichung (635) der relativen magnetischen Objektposition und/oder einer relativen magnetischen Objektausrichtung, die durch eine Translation und/oder eine Rotation des mindestens einen magnetischen Objekts (110) relativ zu der benutzergetragenen Vorrichtung (100) verursacht wird, insbesondere wobei sich die benutzergetragene Vorrichtung (100) in einem betätigten Zustand befindet, und
als Reaktion auf das Erkennen der Positions- und/oder Ausrichtungsabweichung, Bestimmen mindestens eines Auslöseereignisses (636), das der Positions- und/oder Ausrichtungsabweichung zugeordnet ist.

10. Computerimplementiertes Verfahren (600) nach einem der vorstehenden Ansprüche, wobei das Bestimmen eines Standorts (630) der benutzergetragenen Vorrichtung umfasst:
Definieren einer Aufnahmeposition (637) relativ zu der benutzergetragenen Vorrichtung (100), wobei die Aufnahmeposition (191) insbesondere in Bezug auf ein Vorrichtungskoordinatensystem definiert ist, und
Bestimmen des Standorts (630) der benutzergetragenen Vorrichtung relativ zu der Aufnahmeposition.

11. Computerimplementiertes Verfahren (600) nach einem der vorstehenden Ansprüche, wobei die eine oder die mehreren Ausgabevorrichtungen (500) eine Ausgabevorrichtungsebene (501) definieren und wobei das Bestimmen eines Zeigestandorts (640) umfasst:
Bestimmen (664) eines virtuellen Schnittpunkts (I) der Zeigerichtung (190) und der Ausgabevorrichtungsebene (501).

12. Computerimplementiertes Verfahren (600) nach einem der vorstehenden Ansprüche, wobei die Zeigeposition eine Position der benutzergetragenen Vorrichtung (100) innerhalb des Erfassungsvolumens (M) relativ zu der einen oder den mehreren Ausgabevorrichtungen (500) angibt.

13. Computerimplementiertes Verfahren (600) nach einem der vorstehenden Ansprüche, wobei das Bestimmen (650), dass die benutzergetragene Vorrichtung (100) mit einer Ausgabevorrichtung der einen oder der mehreren Ausgabevorrichtungen (500) interagiert, umfasst:
Bewegen der benutzergetragenen Vorrichtung (100) direkt auf der ausgewählten Ausgabevorrichtung.

14. System (10) zum Steuern einer Darstellung einer benutzergetragenen Vorrichtung (100) in Bezug auf eine oder mehrere Ausgabevorrichtungen (500), umfassend:
die benutzergetragene Vorrichtung (100), umfassend mindestens ein magnetisches Objekt (110),
eine Vielzahl von Magnetometern (300), die konfiguriert sind, um Magnetfeldmessungen, die dem mindestens einen magnetischen Objekt (110) zugeordnet sind, durchzuführen, und
ein oder mehrere Ausgabevorrichtungen (500),
wobei das System (10) konfiguriert ist, um ein computerimplementiertes Verfahren (600) nach einem der Ansprüche 1 bis 13 auszuführen.

## Revendications

1. Procédé mis en œuvre par ordinateur (600) destiné à commander une représentation d'un dispositif porté par l'utilisateur (100) par rapport à un ou plusieurs dispositifs de sortie (500), comprenant :
- l'obtention de mesures de champ magnétique (610) associées à au moins un objet magnétique (110) et mesurées avec une pluralité de magnétomètres (300), dans lequel l'au moins un objet magnétique (110) est accouplé à un appareil porté par l'utilisateur (100),
- l'obtention de données d'emplacement de dispositif de sortie (620) indiquant l'emplacement d'un ou de plusieurs dispositifs de sortie (500) par rapport à la pluralité de magnétomètres (300),
- la détermination d'un emplacement de dispositif porté par l'utilisateur (630) en fonction des mesures de champ magnétique collectées,
- la détermination d'un emplacement de pointage (640) du dispositif porté par l'utilisateur (100) par rapport au dispositif de sortie ou aux nombreux dispositifs de sortie (500) en fonction des données d'emplacement de dispositif de sortie et de l'emplacement du dispositif porté par l'utilisateur, dans lequel la détermination de l'emplacement de pointage (640) comprend la détermination d'une direction de pointage (660) et d'une position de pointage (670) du dispositif porté par l'utilisateur (100) par rapport au dispositif de sortie ou aux nombreux dispositifs de sortie (500), et
- la détermination (650) selon laquelle le dispositif porté par l'utilisateur (100) interagit avec un dispositif de sortie parmi le dispositif de sortie et les nombreux dispositifs de sortie (500) en fonction de l'emplacement de pointage déterminé, laquelle détermination comprend la sélection d'un dispositif de sortie parmi le dispositif de sortie et les nombreux dispositifs de sortie (500) en fonction de l'emplacement de pointage déterminé.

2. Procédé mis en œuvre par ordinateur (600) selon la revendication 1, dans lequel la pluralité de magnétomètres (300) est associée à un plan magnétométrique (310), plus spécifiquement dans lequel le plan magnétométrique (310) est défini par un plan qui s'étend à travers une majorité de la pluralité de magnétomètres (300).

3. Procédé mis en œuvre par ordinateur (600) selon la revendication 2, comprenant : la définition d'un système de coordonnées de référence (XYZ) par rapport à la pluralité de magnétomètres (300), le système de coordonnées de référence (XYZ) comprenant un premier axe de référence (X), un second axe de référence (Y) et un axe de référence vertical (Z), dans lequel le premier axe de référence (X) et le second axe de référence (Y) sont orthogonaux l'un par rapport à l'autre, et dans lequel l'axe de référence vertical (Z) est orthogonal au premier axe de référence (X) et au second axe de référence (Y) et s'étend à travers un centre de la pluralité de magnétomètres (300), éventuellement, dans lequel le premier axe de référence (X) et le second axe de référence (Y) sont définis sur le plan magnétométrique (310), et dans lequel l'axe de référence vertical (Z) est orthogonal au plan magnétométrique (310).

4. Procédé mis en œuvre par ordinateur (600) selon l'une des revendications précédentes, dans lequel les données d'emplacement de dispositif de sortie comprennent un ensemble de paramètres d'emplacement de dispositif de sortie indiquant une position géométrique, une orientation géométrique et/ou une distance géométrique du dispositif de sortie ou des nombreux dispositifs de sortie (500) par rapport à la pluralité de magnétomètres (300).

5. Procédé mis en œuvre par ordinateur (600) selon la revendication 4, prise en dépendance de la revendication 3, dans lequel l'ensemble des paramètres d'emplacement de dispositif indique une position géométrique, une orientation géométrique et/ou une distance géométrique par rapport au système de coordonnées de référence (XYZ) et/ou au plan magnétométrique (310).

6. Procédé mis en œuvre par ordinateur (600) selon l'une quelconque des revendications 3 à 5, dans lequel la détermination d'un emplacement de dispositif porté par l'utilisateur (630) comprend :
la détermination d'un emplacement d'objet magnétique absolu (631) indiquant un emplacement d'objet magnétique absolu et/ou une orientation d'objet magnétique absolu de l'au moins un objet magnétique (110) par rapport au système de coordonnées de référence (XYZ), plus spécifiquement dans lequel l'emplacement d'objet magnétique absolu est déterminé sur la base des mesures de champ magnétique obtenues.

7. Procédé mis en œuvre par ordinateur (600) selon la revendication 6, dans lequel l'emplacement d'objet magnétique absolu comporte un vecteur de moment magnétique (120) et/ou un vecteur de position magnétique associé à l'au moins un objet magnétique (110), dans lequel le vecteur de moment magnétique (120) indique une orientation d'objet magnétique et/ou dans lequel le vecteur de position magnétique indique une position d'objet magnétique par rapport au système de coordonnées de référence (XYZ).

8. Procédé mis en œuvre par ordinateur (600) selon l'une quelconque des revendications précédentes, dans lequel la détermination d'un emplacement de dispositif porté par l'utilisateur (630) comprend :
la détermination d'un emplacement relatif d'objet magnétique (634) indiquant une position relative d'objet magnétique et/ou une orientation relative d'objet magnétique (110) par rapport au dispositif porté par l'utilisateur (110), plus spécifiquement par rapport à un système de coordonnées de dispositif.

9. Procédé mis en œuvre par ordinateur (600) selon la revendication 8, dans lequel la détermination d'un emplacement relatif d'objet magnétique (634) comprend :
la détection d'un écart de position et/ou d'orientation (635) de la position relative d'objet magnétique et/ou d'orientation relative d'objet magnétique provoqué par une translation et/ou une rotation de l'au moins un objet magnétique (110) par rapport au dispositif porté par l'utilisateur (100), plus spécifiquement dans lequel le dispositif porté par l'utilisateur (100) se trouve dans un état actionné, et
la détermination, en réponse à la détection de l'écart de position et/ou d'orientation, d'au moins un événement déclencheur (636) associé à l'écart de position et/ou d'orientation.

10. Procédé mis en œuvre par ordinateur (600) selon l'une quelconque des revendications précédentes, dans lequel la détermination d'un emplacement de dispositif porté par l'utilisateur (630) comprend :
la définition d'une position de capture (637) par rapport au dispositif porté par l'utilisateur (100), plus spécifiquement dans lequel la position de capture (191) est définie par rapport à un système de coordonnées de dispositif, et
la détermination de l'emplacement de dispositif porté par l'utilisateur (630) par rapport à la position de capture.

11. Procédé mis en œuvre par ordinateur (600) selon l'une quelconque des revendications précédentes, dans lequel le dispositif de sortie ou les nombreux dispositifs de sortie (500) définissent un plan de dispositif de sortie (501), et dans lequel la détermination d'un emplacement de pointage (640) comprend :
la détermination (664) d'un point d'intersection virtuel (I) de la direction de pointage (190) et du plan de dispositif de sortie (501).

12. Procédé mis en œuvre par ordinateur (600) selon l'une quelconque des revendications précédentes, dans lequel la position de pointage indique une position du dispositif porté par l'utilisateur (100) dans le volume de détection (M) par rapport au dispositif de sortie ou aux nombreux dispositifs de sortie (500).

13. Procédé mis en œuvre par ordinateur (600) selon l'une quelconque des revendications précédentes, dans laquelle la détermination (650) selon laquelle le dispositif porté par l'utilisateur (100) interagit sur un dispositif de sortie parmi le dispositif de sortie et les nombreux dispositifs de sortie (500) comprend :
le déplacement du dispositif porté par l'utilisateur (100) directement sur le dispositif de sortie sélectionné.

14. Système (10) permettant de commander une représentation d'un dispositif porté par l'utilisateur (100) par rapport à un ou plusieurs dispositifs de sortie (500), comprenant :
le dispositif porté par l'utilisateur (100) comprenant au moins un objet magnétique (110),
une pluralité de magnétomètres (300) configurés pour effectuer des mesures de champ magnétique associées à au moins un objet magnétique (110), et
un ou plusieurs dispositifs de sortie (500),
dans lequel le système (10) est configuré pour exécuter un procédé mis en œuvre par ordinateur (600) selon l'une quelconque des revendications 1 à 13.
